# EUROPÄISCHE PATENTANMELDUNG

(11) **EP 0 634 599 A1**
(43) Veröffentlichungstag der Anmeldung: **18.01.1995**
(21) Anmeldenummer: 94108123.4
(22) Anmeldetag: 26.05.1994
(51) Int. Cl.: F16L 27/107, F16L 25/00

(54) **Flexible Rohrverbindung**

(30) Priorität: 25.06.1993 DE 4321162
(71) Anmelder: Daimler-Benz Aerospace Airbus Gesellschaft mit beschränkter Haftung, D-21129 Hamburg (DE)
(72) Erfinder: Hubert, Andreas, D-21717 Fredenbeck (DE)
(74) Vertreter: Hansmann, Dierk, Dipl.-Ing.

(57) **Zusammenfassung**

Bei einer flexiblen Rohrverbindung, insbesondere für ein Vakuumtoilettensystem an Bord eines Flugzeuges, wobei an den zu verbindenden Rohrenden Flansche angeordnet sind, besteht die Erfindung darin, daß jedes Rohrende mit einem Flanschelement versehen ist, das aus einer Muffe 4,5 und einem Flansch 6,7 besteht, die einstückig miteinander verbunden sind, wobei die Flanschelemente aus einem elastischen Material bestehen und eine Kontaktschicht aufweisen und mit ihren Muffen 4,5 die Rohrenden von außen umschließen und jeweils durch mindestens eine Spannschelle 8 befestigt sind, wobei auf den Rückseiten der Flansche 6,7 jeweils ein Stützring 9,10 mit einer äußeren Kegelfläche angeordnet ist.

Hierbei ist insbesondere vorteilhaft, daß die Verbindungen zwischen den Flanschen und den Rohren leicht herzustellen und zu lösen sind.

## Beschreibung

Die Erfindung bezieht sich auf eine flexible Rohrverbindung, insbesondere für ein Vakuumtoilettensystem an Bord eines Flugzeuges, wobei an den zu verbindenden Rohrenden Flansche angeordnet sind. Eine derartige Rohrverbindung ist beispielsweise durch die Norm ABS 0395 bekannt. Hierbei sind an den zu verbindenden Enden der metallischen Rohre entsprechende metallische Flansche durch Schweißen oder Einrollen befestigt. Die Flansche weisen je eine radial eingebrachte Rille auf, in die jeweils ein O-Ring eingesetzt ist. In montiertem Zustand befinden sich beide Flansche in einer zylindrischen Hülse, die beide Flansche umschließt und deren Innendurchmesser so bemessen ist, daß die Innenfläche der Hülse mit einer Vorspannung an den O-Ringen anliegt. Die Hülse ist in Bezug auf die Flansche durch eine Spannschelle gegen axiale Verschiebung gesichert, wobei jedoch ein axialer Spielraum vorgesehen ist, um Längenabweichungen auszugleichen. Dabei ist eine Winkelabweichung von ± 4° zulässig. Das Festziehen der Spannschelle geschieht durch selbstsichernde Schnappverschlüsse. Um einen guten elektrischen Kontakt zwischen beiden Rohren herzustellen, weist die Spannschelle Kontaktfedern auf, die am jeweiligen Flansch mit einer Vorspannung anliegen. Diese Rohrverbindung besteht aus einer relativ großen Anzahl von Einzelteilen, die bei ihrer Montage auf genauen Sitz zu überprüfen sind. Im Falle einer Reparatur gestaltet sich der Austausch der Flansche wegen der Schweiß- bzw. Einrollverbindung schwierig. Außerdem wurde festgestellt, daß der Übergangswiderstand der Kontaktfedern mit der Zeit stark zunimmt.

Demgemäß liegt der Erfindung die Aufgabe zugrunde, eine gattungsgemäße Rohrverbindung derart auszubilden, daß das Anschweißen bzw. Einrollen der Flansche entfällt und auf Dauer ein guter elektrischer Kontakt zwischen den Rohren erreicht wird.

Diese Aufgabe wird bei einer Rohrverbindung der eingangs genannten Art dadurch gelost, daß jedes Rohrende mit einem Flanschelement versehen ist, das aus einer Muffe und einem Flansch besteht, die einstückig miteinander verbunden sind, wobei die Flanschelemente aus einem elastischen Material bestehen und eine Kontaktschicht aufweisen und mit ihren Muffen die Rohrenden von außen umschließen und jeweils durch mindestens eine Spannschelle befestigt sind, wobei auf den Rückseiten der Flansche jeweils ein Stützring mit einer äußeren Kegelfläche angeordnet ist.

Dabei ist insbesondere von Vorteil, daß die Verbindungen zwischen den Flanschen und den Rohren leicht herzustellen und zu lösen sind.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Rohrverbindung,
- Fig. 2: die Einzelheit II nach Fig. 1,
- Fig. 3: eine Ausgestaltung mit einer außen liegenden Kontaktschicht,
- Fig. 4: die Einzelheit IV nach Fig. 3,
- Fig. 5: eine Ausbildung nach Fig. 3 mit direktem Kontakt,
- Fig. 6: eine Ausbildung nach Fig. 3 mit indirektem Kontakt und
- Fig. 7: eine Ausbildung mit innen liegender Kontaktschicht.

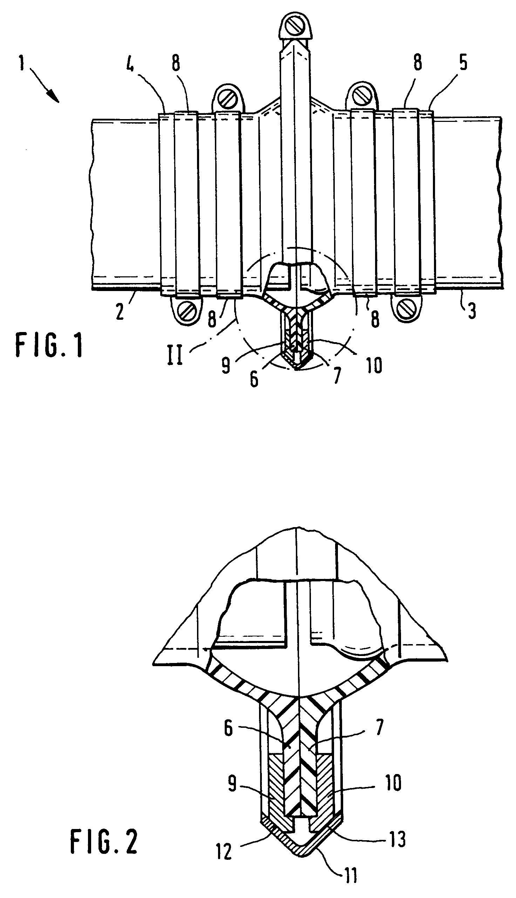

Die Fign. 1 und 2 zeigen eine Rohrverbindung 1 mit zwei zu verbindenden Rohren 2 und 3. Jedes Rohrende ist mit einem Flanschelement versehen, das jeweils aus einer Muffe 4 bzw. 5 und einem Flansch 6 bzw. 7 besteht, die einstückig miteinander verbunden sind. Die aus einem elastischen Material bestehenden Flanschelemente liegen mit ihren Muffen 4,5 an der Außenfläche der Rohrenden an und sind jeweils durch zwei Spannschellen 8 befestigt. Auf den Rückseiten der Flansche 6,7 ist jeweils ein Stützring 9,10 mit einer äußeren Kegelfläche 12,13 angeordnet. Die Stützringe 9,10 sind unlösbar mit den Flanschen 6,7 verbunden. Um die Flansche 6,7 miteinander zu verbinden, ist eine sog. V-Schelle 11 vorgesehen. Diese V-Schelle weist einen v-förmigen Querschnitt auf und wirkt mit den Stützringen 9,10 so zusammen, daß die Flansche 6,7 durch Anziehen der V-Schelle 11 mit ihren Stirnseiten fest aneinander gepreßt werden.

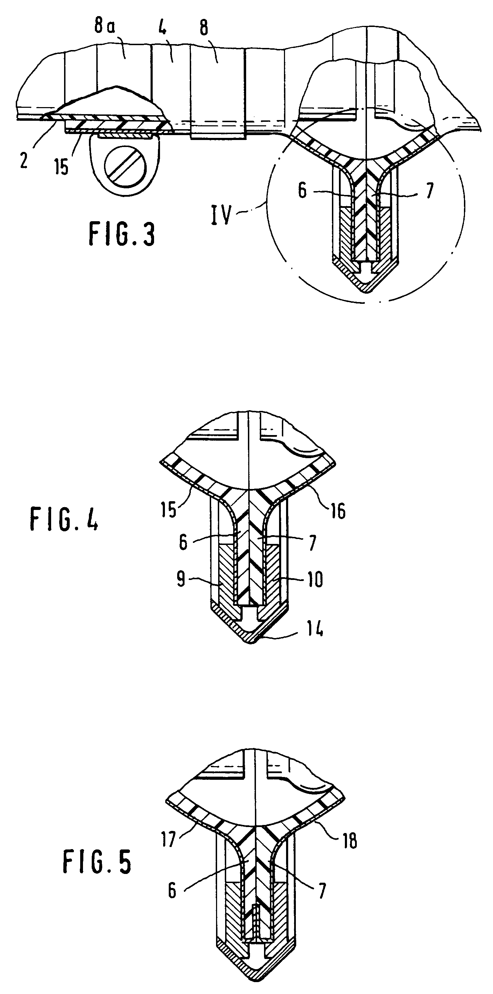

Fig. 3 zeigt eine Teilansicht der Rohrverbindung mit der Muffe 4 und den Spannschellen 8, wobei die vom Flansch 6 weiter entfernt gelegene Spannschelle mit 8a bezeichnet ist. Die Außenseite der Muffe 4 ist mit einer Kontaktschicht versehen, die sich über das freie Ende der Muffe 4 um dieses herum bis auf die Innenfläche der Muffe 4 erstreckt, so daß sie hier bis unter die Spannschelle 8a reicht. Damit besteht ein guter elektrischer Kontakt zwischen dem Rohr 2 und der Kontaktschicht 15. Die Kontaktschicht 15 erstreckt sich bis in den Bereich des Flansches 6. Verschiedene Ausbildungen der Kontaktschichten im Bereich der betreffenden Flansche ergeben sich aus den nachfolgend beschriebenen Darstellungen.

So zeigt Fig. 4 den Flansch 6 mit einer Ausbildung der Kontaktschicht 15. Diese Lösung besteht darin, daß sich die Kontaktschicht 15 auf der Rückseite des Flansches 6 bis zu dessen Rand erstreckt. Der entsprechende Stützring 9 ist unlösbar mit dem Flansch 6 und mit der Kontaktschicht 15 verbunden, wobei ein guter elektrischer Kontakt zwischen der Kontaktschicht 15 und dem Stützring 9 besteht. In gleicher Weise ist der Flansch 7 mit der Kontaktschicht 16 und dem Stützring 10 versehen. Die Kontaktschichten 15 und 16 sowie die Stützringe 9 und 10 und die V-Schelle 14 bestehen aus geeigneten metallischen Materialien. In montiertem Zustand der Rohrverbindung 1 ist daher ein guter elektrischer Kontakt zwischen dem Rohr 2 und dem Rohr 3 über die Kontaktschichten 15,16, die Stützringe 9,10 und die V-Schelle 14 sichergestellt.

Fig. 5 zeigt eine andere Ausbildung des Flanschbereiches der Rohrverbindung mit Kontaktschichten 17 und 18. Diese Ausgestaltung besteht darin, daß sich die Kontaktschichten 17,18 von den Rückseiten der Flansche 6,7 über deren Ränder bis auf die Stirnseiten der Flansche 6,7 erstrecken. Damit stehen die Kontaktschichten 17,18 in montiertem Zustand direkt miteinander in elektrischer Verbindung.

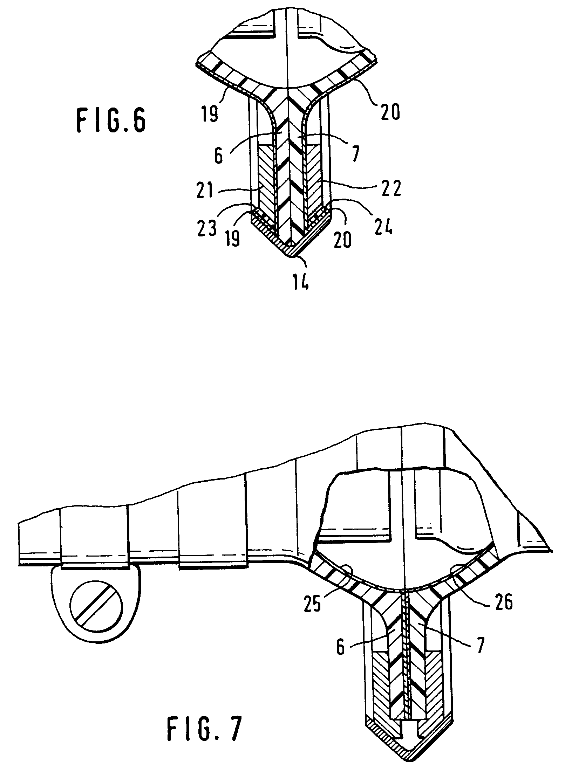

Fig. 6 zeigt eine weitere Ausbildung des Flanschbereiches der Rohrverbindung mit Kontaktschichten 19,20 und Stützringen 21,22. Diese Ausgestaltung besteht darin, daß sich die Kontaktschichten 19,20 von den Rückseiten der Flansche 6,7 bis auf die Kegelflächen der Stützringe 21,22 erstrecken, wobei zwischen den Kegelflächen und den Kontaktschichten 19,20 je eine Elastomerschicht 23,24 angeordnet ist. Damit ergibt sich ein elastischer Kontaktdruck zwischen den Kontaktschichten 19,20 und der V-Schelle 14.

Fig. 7 zeigt schließlich eine andere Ausgestaltung der Rohrverbindung, die darin besteht, daß die Kontaktschichten 25,26 auf den Innenseiten der Flanschelemente angeordnet sind und sich bis auf die Stirnflächen der Flansche 6,7 erstrecken.

Die Rohrverbindung kann aus allen Materialien hergestellt werden, die aufgrund ihrer Eigenschaften in Betracht kommen. In einer bevorzugten Ausbildung bestehen die Flanschelemente aus glasfaserverstärktem Silikonkautschuk und die restlichen Teile einschließlich der Kontaktschichten aus rostfreiem Stahl. Um das Gewicht der Rohrverbindung zu reduzieren, können die Stützringe anstatt aus Metall auch aus einem hinreichend steifen Kunststoff hergestellt werden, wobei jedoch zu beachten ist, daß dies nur im Falle solcher Ausgestaltungen sinnvoll ist, in denen die zwischen beiden Rohren bestehende elektrische Verbindung nicht über die Stützringe verläuft. Die Befestigung der Stützringe an den Flanschen 6,7 geschieht durch geeignete Maßnahmen, beispielsweise durch Kleben oder Vulkanisieren.

In einer bevorzugten Ausbildung der Kontaktschicht besteht diese aus einem auf der betreffenden Fläche des Flanschelementes angeordneten Metallgeflecht. Dabei ist das Geflecht in Form einzelner Streifen oder in Form eines Gewebe-Strumpfes denkbar, der die entsprechende Fläche vollständig überdeckt. Die Kontaktschicht ist auch durch einzelne Metallfolien realisierbar.

## Patentansprüche

1. Flexible Rohrverbindung, insbesondere für ein Vakuumtoilettensystem an Bord eines Flugzeuges, wobei an den zu verbindenden Rohrenden Flansche angeordnet sind,
dadurch **gekennzeichnet**, daß jedes Rohrende mit einem Flanschelement versehen ist, das aus einer Muffe (4,5) und einem Flansch (6,7) besteht, die einstückig miteinander verbunden sind, wobei die Flanschelemente aus einem elastischen Material bestehen und eine Kontaktschicht aufweisen und mit ihren Muffen (4,5) die Rohrenden von außen umschließen und jeweils durch mindestens eine Spannschelle (8) befestigt sind, wobei auf den Rückseiten der Flansche (6,7) jeweils ein Stützring (9,10) mit einer äußeren Kegelfläche (12,13) angeordnet ist.

2. Rohrverbindung, nach Anspruch 1,
dadurch **gekennzeichnet**, daß die Kontaktschicht (15,16) auf der Außenseite des Flanschelementes angeordnet ist und sich zum einen über das freie Ende der Muffe (4,5) um dieses herum bis auf die Innenfläche der Muffe (4,5) erstreckt und zum anderen im Bereich des Flansches (6) mit der Kontaktschicht (15,16) des Gegenflansches (7) elektrisch verbindbar ist.

3. Rohrverbindung, nach Anspruch 1 oder 2,
dadurch **gekennzeichnet**, daß sich die Kontaktschicht (15) auf der Rückseite des Flansches (6) bis zu dessen Rand erstreckt.

4. Rohrverbindung, nach einem der Ansprüche 1 bis 3,
dadurch **gekennzeichnet**, daß sich die Kontaktschichten (17,18) von den Rückseiten der Flansche (6,7) über deren Ränder bis auf die Stirnseiten der Flansche (6,7) erstrecken.

5. Rohrverbindung, nach einem der Ansprüche 1 bis 4,
dadurch **gekennzeichnet**, daß sich die Kontaktschichten (19,20) von den Rückseiten der Flansche (6,7) bis auf die Kegelflächen der Stützringe (21,22) erstrecken.

6. Rohrverbindung, nach einem der Ansprüche 1 bis 5,
dadurch **gekennzeichnet**, daß daß zwischen den Kegelflächen und den Kontaktschichten (19,20) je eine Elastomerschicht (23,24) angeordnet ist.

7. Rohrverbindung, nach einem der Ansprüche 1 bis 6,
dadurch **gekennzeichnet**, daß die Kontaktschichten (25,26) auf den Innenseiten der Flanschelemente angeordnet sind und sich bis auf die Stirnflächen der Flansche (6,7) erstrecken.

8. Rohrverbindung, nach einem der Ansprüche 1 bis 7,
dadurch **gekennzeichnet**, daß die Kontaktschicht (15,16,17,18) aus einem Metallgeflecht besteht.
